# EUROPEAN PATENT SPECIFICATION

(11) **EP 0 580 349 B1**
(45) Date of publication and mention of the grant of the patent: **22.10.1997**
(21) Application number: 93305498.3
(22) Date of filing: 14.07.1993
(51) Int. Cl.: B23D 61/02

(54) **Circular saw blade**
Kreissägeblatt
Lame de scie circulaire

(30) Priority: 21.07.1992 JP 193893/92
(43) Date of publication of application: 26.01.1994
(73) Proprietor: HITACHI KOKI CO., LTD., Chiyoda-ku, Tokyo (JP)
(72) Inventor: Satou, Satsuo, Katsuta-shi, Ibaraki-ken (JP); Yoshida, Yukihiro, Katsuta-shi, Ibaraki-ken (JP); Abe, Takao, Katsuta-shi, Ibaraki-ken (JP); Yokoyama, Kousei, c/o Hitachi Koki Haramachi Co., Haramachi-shi, Fukushima-ken (JP)
(74) Representative: Jackson, Peter Arthur

(56) References cited:
- EP-A- 0 192 872
- EP-A- 0 288 775
- DE-U- 8 532 717
- US-A- 1 663 241
- US-A- 4 889 025
- DATABASE WPI Week 8412, Derwent Publications Ltd., London, GB; AN 84-071750 & JP-A-59 025 957 (NITTOKU KAKO CENTER)
- DATABASE WPI Week 8530, Derwent Publications Ltd., London, GB; AN 85-180104 & JP-A-60 106 941 (HITACHI CHOKO KK)

## Description

The present invention relates to a circular saw blade according to the precharacterising portion of claim 1 (see e.g. US-A 4 889 025) for cutting rigid materials such as a metallic pipe, and more particularly to a circular saw blade provided with cutting inserts made of a material having high hardness.

There has been conventionally known in the art circular saws with a motor rotatingly driving a blade for cutting hard materials such as metallic workpiece. Grinding wheels have commonly been used as the blade. However, there has been known a problem with grinding wheels in that when a grinding wheel contacts a workpiece, sparks and red-hot metal filings scattered about, possibly igniting combustible materials in the vicinity. Also, adhesives fixing the abrasive particles of the grinding wheel produce foul odors when heated by friction during the cutting process.

Because these problems degrade the working environment and create a potential source of harm for workers, there has been a strong requirement for development of a grinding wheel-less cutter which can effectively cut metallic workpiece. Metal disks having teeth capped with insert of high hardness material along the periphery have replaced grinding wheels. Although circular saw blades with the inserts of high hardness material improve upon the problems of grinding wheels, the life of circular saw blades with the inserts is undesirably short. Also, the cutting insert may crack and chip off, which may incur danger to the workers.

The object of the present invention is to provide an improved circular saw blade having cutting inserts formed of high hardness material capable of improving impact resistance of the inserts and improving wear resistivity thereof, thereby providing the circular saw blade with a prolonged service life.

These and other objects of the present invention will be attained by providing a circular saw blade including a circular disk body having an outer peripheral portion provided with teeth, and cutting inserts each fixed to each radially outer end of the teeth characterized by
the cutting insert consisting of: from 9 to 15 wt% of at least one of Co and Ni, from 31 to 44 wt% of titanium carbide, tantalum carbide and niobium carbide, and balance tungsten carbide,
from 80 to 90 wt% of the titanium carbide, tantalum carbide, niobium carbide and tungsten carbide having particle size of from 1 to 3 µm.

Particular embodiments of the present invention will now be described with reference to the accompanying drawings, in which:-
Fig. 1 is side view showing an example of a circular saw blade for cutting a metallic workpiece;
Fig. 2 is an enlarged perspective view showing a teeth and cutting inserts of a circular saw blade of an alternating tip fashion to which the present invention is applicable;
Fig. 3 is an enlarged perspective view showing a teeth and cutting inserts of a circular saw blade of an unevenness shape tip fashion to which the present invention is applicable;
Fig. 4(a) is a partial side view showing a size of a cutting insert of an alternating tip type used in comparative experiments;
Fig. 4(b) is a partial front view showing a size of the cutting insert of the alternating tip type shown in Fig. 4(a);
Fig. 5(a) is a partial side view showing a size of a cutting insert of an unevenness shape type used in comparative experiments;
Fig. 5(b) is a partial front view showing a size of the cutting insert of the unevenness shape type shown in Fig. 5(a);
Fig. 6 is a graph showing a comparison of service life of circular saw blades;
Fig. 7 is a graph showing the rate of generation of chipping-off or wearing in the cutting inserts;
Fig. 8 is a perspective view showing a damage at rake surfaces.

A circular saw blade according to a preferred embodiment of the present invention will be described while referring to the accompanying drawings.

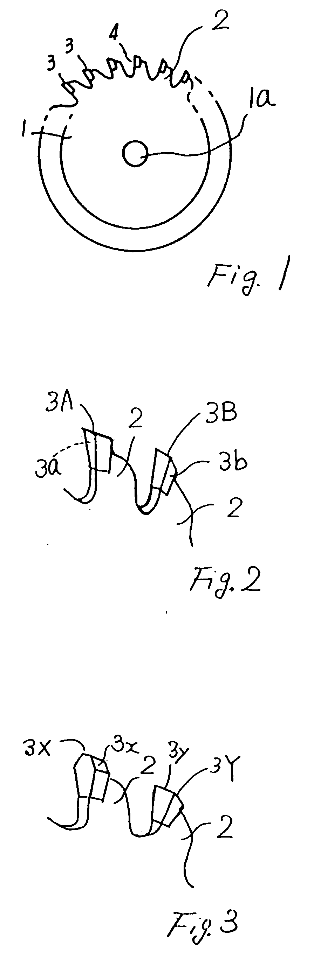

The general shape of a circular saw blade for cutting metal workpiece is as shown in Fig. 1. The circular saw blade includes a blade disk body 1 formed with a central hole 1a for fixing the blade body 1 to a rotating member (not shown), teeth 2 provided at an outer peripheral edge portion of the blade disk body 1, and cutting inserts 3 or tips fixed to each tip end portion of the tooth 2 by, for example, brazing. The cutting inserts 3 provide raked surfaces 4.

Fig. 2 shows a circular saw blade of an alternating tip fashion. In this saw blade, a preceding insert 3A has a slant cutting edge 3a for cutting one side of a cut-groove of a workpiece and a succeeding insert 3B has a reversely slant cutting edge 3b for cutting another side of the cut-groove of the workpiece. These inserts 3A and 3B are alternately arrayed in the rotational direction of the blade disk body 1.

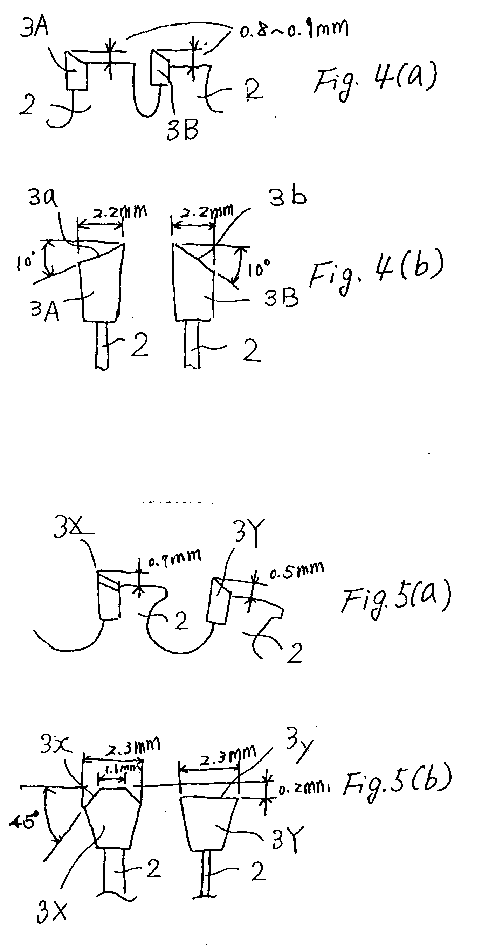

Fig. 3 shows an another circular saw blade of a unevenness shape tip fashion. In this saw blade, a preceding insert 3X has a hexagonal shape in which chamfered top edges 3x cut bottom portion of a cut-groove of a workpiece. A succeeding insert 3Y has a trapezoidal shape having a flat top edge 3y for cutting opposite side walls of the cut-groove of the workpiece. Outer edges of the hexagonal inserts 3X are positioned more radially outwardly than the outer edges of the trapezoidal inserts 3Y, and these inserts 3X and 3Y are alternately arrayed in the rotational direction of the blade disk body 1.

The cutting insert 3 is formed of a high hardness materials such as titanium (Ti) carbide, tantalum (Ta) carbide, niobium (Nb) carbide and tungsten (W) carbide, and a binder such as cobalt (Co) and Nickel (Ni). Amount of the carbides of Ti, Ta and Nb is in a range of from 31 to 44 % by weight, and amount of the binder is in a range of from 9 to 15 % by weight. Balance is the W carbide. Co or Ni is solely used as the binder or these are co-used. Further, 80 to 90 % of the carbides have particle size of from 1 to 3 µm. These compositions will provide a resultant insert having sufficient impact resistance and wear resistance to thus largely prolong service life thereof.

Preferably, Ti carbide is contained by 13 to 19 wt%, (Nb plus Ta) carbides is contained by 18 to 25 wt%, and W carbide is contained by 41 to 60 wt%. If amount of each of the carbides is less than the respective lower limit, wear resistivity of the insert is excessively lowered. On the other hand, if the amount of each of the carbides exceed the respective upper limit, the insert becomes excessively brittle causing cracking and chipping-off.

The preferable range for Co only or Ni only or Co plus Ni used as the binder was determined as 9 to 15 wt%. Experiments confirm that toughness drops when binder amounts to less than 9 wt%, although hardness is increased and wear resistance is improved. On the other hand, when the amount of binder exceeds 15 wt%, the wear resistance is excessively lowered, although cracking or chipping-off the cutting insert can be reduced.

Further, as a modified embodiment of the present invention, zirconium (Zr) carbide, chromium (Cr) carbide, vanadium (V) carbide, hafnium (Hf) carbide, or iron (Fe) carbide can be intentionally added to slightly change the characteristic, or added as impurities. However, total amount of these supplemental carbides must be not more than 2 wt% for obtaining the desired characteristics from the above described requisite carbides.

Also, the characteristics of the present invention remain the same even if 50 % of Co is replaced by Ni. However, using only Co is desirable to maintain stabilized characteristics.

In the ranges for composition amounts described above, the most desirable composition ratio depends on the circumferential speed of the circular saw blade. For example, if the circumferential speed is 1,200 to 1,500 m/min at a no load condition and if the circumferential speed is 700 to 1,100 m/min under the actual loading condition, and if the radially protrusion length of the cutting edge per one insert is 0.05 to 1.0 mm, the optimum range for amount of titanium carbide is 14 to 16 wt%, tantalum and niobium carbides are 18 to 20 wt%, amount of Co as the binder is 9 to 12 wt%, and the remainder being tungsten carbide.

Next, particle size distribution of each of the above carbides will be described. The particle sizes referred to below are the particle diameters of the carbides particles after sintering. Generally, with the same amount of the binder, increase in particle diameter increase toughness but decrease hardness. Distribution of particle size under the cutting condition to perform desirable cutting is determined such that from 80 to 90 wt% of the carbides have particle size of from 1 to 3 µm. If not less than 10 wt% of the carbides having particle size of less than 1µm are contained, chipping-off of the insert frequently occurs. Further, if not less than 10 wt% of the carbides having particle size of more than 3µm are contained, the insert is abraded or worn easily.

Then, if the particle size of 1 to 2µm is largely contained, impact resistance may be lowered even though service life can be prolonged. Further, if the carbides having particle size of from 2 to 3 µm is largely contained, the impact resistance can be improved but service life is lowered. Thus, the optimum particle distribution is as follows:

| size | amount |
|---|---|
| less than 1 µm | not more than 10 wt% |
| more than 3 µm | not more than 10 wt% |
| 1 to 3 µm | 80 to 90 wt% |
| 2 to 3 µm | 20 to 30 wt% |
| 1 to 2 µm | balance |

The cutting insert according to the present invention can be applied to the circular saw blade of unevenness shape tip fashion such as shown in Fig. 3 as well as to the circular saw blade of alternating tips such as shown in Fig. 2. However, for making use of the characteristic of the cutting insert of the present invention as much as possible, the insert can be advantageously applied to the saw blade of the unevenness shape tip type. This is because in the latter type stress is uniformly imparted on the external contour of the symmetrically arranged trapezoidal and hexagonal inserts for obviating stress concentration, to thus provide prolonged service life.

### Experiment 1

The inventors performed comparative experiments to examine the service life of conventional circular saw blade and that of circular saw blade according to the present invention. The workpiece to be cut was a cylindrical steel pipe having outer diameter of 60 mm and thickness of 4 mm.

Sample 1 was a conventional circular saw blade of the alternating tip type. The Sample 1 contained 8 wt% of TiC, 5.3 wt% of TaC, 4.5 wt% of NbC, 9.0 wt% of Co and the balance WC. The size of the insert was shown in Figs. 4(a) and 4(b), in which the insert had a radially protruding length of 0.8 to 0.9 mm from the top end of the tooth, axial width of 2.2 mm and opposite inclination angle of 10°.

Sample 2 was a circular saw blade of the alternating tip type according to the present invention. The size was the same as that of Sample 1. Further the Sample 2 contained 15 wt% of TiC, 15 wt% of TaC, 4 wt% of NbC, 10 wt% of Co and the balance WC.

Sample 3 was a circular saw blade of the unevenness shape type according to the present invention. The compositions were the same as those of Sample 2. The size of the insert was shown in Figs. 5(a) and 5(b) in which a tip of the hexagonal insert was protruded from the tip of the tooth by 0.7mm, and a tip of the trapezoidal insert was protruded from the top of the tooth by 0.5 mm. Further, the tip of the hexagonal insert was protruded from the tip of the trapezoidal insert by 0.2 mm. Axial width of the hexagonal and trapezoidal inserts was 2.3 mm. Further, a top width of the hexagonal insert was 1.1 mm and opposite inclination angle of the slant cutting edges of the hexagonal insert was 45°.

With using the respective Samples, tested were numbers of cutting the steel pipes. Through the tests, the each Sample was rotated under the peripheral speed of from 800 to 850 m/min.

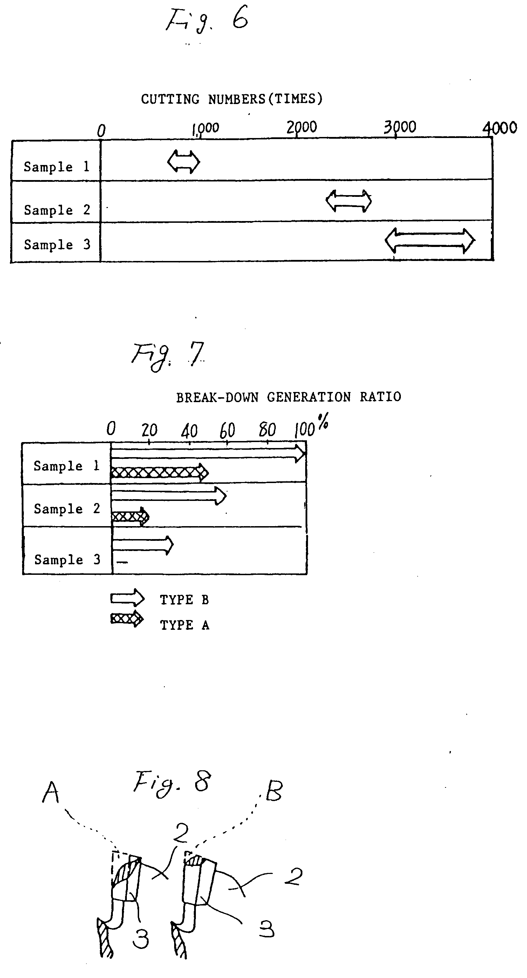

The test results are shown in a graph of Fig. 6. As is apparent from Fig. 6, the conventional circular saw blades (Sample 1) cut through between 700 and 1,000 pipes. On the other hand, the circular saw blade according to the present invention cut between 2,300 to 2,700 pipes (Sample 2) and between 2,900 and 3,800 pipes (Sample 3). Therefore, an extreme improvement in the service life of circular saw blades with the carbide inserts according to the present invention can be demonstrated.

### Experiment 2

The inventors used the identical circular saw blades (Samples 1 through 3) for investigating state of abrasion or chipping-off the cutting inserts at their life-expired state. In a graph shown in Fig. 7, a type A damage is shown by a cross-hatching arrow in which over 20% of the surface area at the raked surface on the cutting insert was abraded or chipped away as shown by a label A of Fig. 8. In Fig. 7, a type B damage is shown by a white-out arrow in which 20% or less of the surface area was abraded or chipped away as shown by a label B of Fig. 8. The rates at which these two types of damage occurred are shown graphically in Fig. 7.

As is apparent from Fig. 7, about 50% of all conventional inserts (Sample 1) showed type A damage. Also, 100% of all conventional insert (Sample 1) showed type B damage. On the other hand, about 20 % of the inserts of the Sample 2 showed type A damage, and about 60 % of the inserts of the Sample 2 showed type B damage. Further, inserts of Sample 3 showed no type A damage. and only 30% of the inserts of the Sample 3 showed type B damage. Thus, it could be confirmed that the circular saw blade according to the present invention provided an ideal abrasive form which magnifies the curvature of the cutting edge almost entirely by abrasion. In other words, chipping off of the cutting insert can be greatly reduced or restrained in the present invention.

## Claims

1. A circular saw blade including a circular disk body (1) having an outer peripheral portion provided with teeth (2), and cutting inserts (3) each fixed to each radially outer end of the teeth characterized by
the cutting insert consisting of: from 9 to 15 wt% of at least one of Co and Ni, from 31 to 44 wt% of titanium carbide, tantalum carbide and niobium carbide, and balance tungsten carbide,
from 80 to 90 wt% of the titanium carbide, tantalum carbide, niobium carbide and tungsten carbide having particle size of from 1 to 3 µm.

2. A circular saw blade according to claim 1, characterized in that the cutting insert consists of from 13 to 19 wt% of the titanium carbide, from 18 to 25 wt% of the niobium carbide and the tantalum carbide, and from 41 to 60 wt% of the tungsten carbide.

3. A circular saw blade according to claim 2, further including not more than 2 wt% of other carbides selected from the group consisting of zirconium carbide, chromium carbide, vanadium carbide, hafnium carbide and iron carbide.

4. A circular saw blade according to claim 1, characterized in that the cutting insert contains not more than 10 wt% of the carbides having particle size of less than 1 µm, not more than 10 wt% of the carbide having particle size of not less than 3 µm, from 20 to 30 wt% of the carbides having particle size of from 2 to 3 µm, and balance the carbide having particle size of from 1 to 2 µm.

5. A circular saw blade according to claim 2, characterized in that a preceding cutting insert has a cutting edge at one lateral side thereof and a succeeding cutting insert has a cutting edge at another lateral side thereof in an alternating fashion with respect to a rotational direction of the circular disk body.

6. A circular saw blade according to claim 2, characterized in that a preceding cutting insert has a hexagonal configuration having a top chamfered surface, and two opposite radially outer slanted cutting edges, and in that a succeeding cutting insert has a trapezoidal shape having a top flat surface, the hexagonal insert and the trapezoidal insert being alternatingly arrayed with respect to a rotational direction of the circular disk body.

## Patentansprüche

1. Kreissägeblatt, das einen kreisförmigen Scheibenkörper (1) mit einem mit Zähnen (2) versehenen Außenumfangsabschnitt und Schneideinsätze (3) umfaßt, die jeweils an jedem radial äußeren Ende der Zähne befestigt sind,
**dadurch gekennzeichnet, daß**
der Schneideinsatz aus folgendem besteht: von 9 bis 15 Gewichtsprozent aus zumindest einem von Co und Ni, von 31 bis 44 Gewichtsprozent aus Titankarbid, Tantalkarbid und Niobkarbid und einem Rest Wolframkarbid,
wobei von 80 bis 90 Gewichtsprozent des Titankarbids, des Tantalkarbids, des Niobkarbids und des Wolframkarbids eine Teilchengröße von 1 bis 3 µm haben.

2. Kreissägeblatt nach Anspruch 1,
**dadurch gekennzeichnet, daß**
der Schneideinsatz von 13 bis 19 Gewichtsprozent aus dem Titankarbid, von 18 bis 25 Gewichtsprozent aus dem Niobkarbid und dem Tantalkarbid und von 41 bis 60 Gewichtsprozent aus dem Wolframkarbid besteht.

3. Kreissägeblatt nach Anspruch 2, das desweiteren nicht mehr als 2 Gewichtsprozent von anderen Karbiden umfaßt, die aus der Gruppe ausgewählt werden, die aus Zirkoniumkarbid, Chromkarbid, Vanadiumkarbid, Hafniumkarbid und Eisenkarbid besteht.

4. Kreissägeblatt nach Anspruch 1,
**dadurch gekennzeichnet, daß**
der Schneideinsatz nicht mehr als 10 Gewichtsprozent der Karbide mit einer Teilchengröße von weniger als 1 µm, nicht mehr als 10 Gewichtsprozent der Karbide mit einer Teilchengröße von nicht weniger als 3 µm, von 20 bis 30 Gewichtsprozent der Karbide mit einer Teilchengröße von 2 bis 3 µm und einen Rest der Karbide mit einer Teilchengröße von 1 bis 2 µm enthält.

5. Kreissägeblatt nach Anspruch 2,
**dadurch gekennzeichnet, daß**
ein vorlaufender Schneideinsatz eine Schneidkante an seiner einen Seite hat und ein nachfolgender Schneideinsatz eine Schneidkante an seiner anderen Seite abwechselnd in bezug auf eine Drehrichtung des kreisförmigen Scheibenkörpers hat.

6. Kreissägeblatt nach Anspruch 2,
**dadurch gekennzeichnet, daß**
ein vorlaufender Schneideinsatz einen hexagonalen Aufbau mit einer oberen abgeschrägten Fläche und zwei entgegengesetzte radial nach außen geneigte Schneidkanten hat und
ein nachfolgender Schneideinsatz eine trapezartige Form mit einer oberen flachen Fläche hat,
wobei der hexagonale Einsatz und der trapezartige Einsatz in bezug auf eine Drehrichtung des kreisförmigen Scheibenkörpers abwechselnd aufgereiht sind.

## Revendications

1. Lame de scie circulaire comprenant un corps de disque circulaire (1) comportant une portion périphérique externe dotée de dents (2), et des inserts de coupe (3) fixés chacun à chaque extrémité externe radialement des dents, caractérisée par :
l'insert de coupe consistant en : 9 à 15 % en poids d'au moins l'un parmi le Co et le Ni, 31 à 44 % en poids de carbure de titane, carbure de tantale et carbure de niobium, et le reste en carbure de tungstène,
80 à 90 % en poids du carbure de titane, du carbure de tantale, du carbure de niobium et du carbure de tungstène ayant une grosseur de particules de 1 à 3 µm.

2. Lame de scie circulaire selon la revendication 1, caractérisée en ce que l'insert de coupe consiste en 13 à 19 % en poids du carbure de titane, 18 à 25 % en poids du carbure de niobium et du carbure de tantale, et 41 à 60 % en poids du carbure de tungstène.

3. Lame de scie circulaire selon la revendication 2, comprenant, en outre, pas plus de 2 % en poids d'autres carbures sélectionnés parmi le groupe consistant en carbure de zirconium, carbure de chrome, carbure de vanadium, carbure de hafnium et carbure de fer.

4. Lame de scie circulaire selon la revendication 1, caractérisée en ce que l'insert de coupe renferme pas plus de 10 % en poids des carbures avec une grosseur de particules inférieure à 1 µm, pas plus de 10 % en poids des carbures avec une grosseur de particules n'étant pas inférieure à 3 µm, de 20 à 30 % en poids des carbures avec une grosseur de particules de 2 à 3 µm, et le reste des carbures avec une grosseur de particules de 1 à 2 µm.

5. Lame de scie circulaire selon la revendication 2, caractérisée en ce qu'un insert de coupe précédent a une arête de coupe sur un de ses côtés latéraux et un insert de coupe suivant a une arête de coupe sur un de ses autres côtés latéraux, en alternance par rapport à un sens de rotation du corps de disque circulaire.

6. Lame de scie circulaire selon la revendication 2, caractérisée en ce qu'un insert de coupe précédent a une configuration hexagonale comportant une surface chanfreinée supérieure, et deux arêtes de coupe inclinées radialement vers l'extérieur, opposées, et en ce qu'un insert de coupe suivant a une forme trapézoïdale comportant une surface plate supérieure, l'insert hexagonal et l'insert trapézoïdal étant disposés en alternance par rapport à un sens de rotation du corps de disque circulaire.
